# EUROPEAN PATENT APPLICATION

(11) **EP 4 560 874 A1**
(43) Date of publication of application: **28.05.2025**
(21) Application number: 23894957.2
(22) Date of filing: 20.11.2023
(51) Int. Cl.: H02J 7/00, H04L 12/40

(54) **BATTERY DEVICE AND BATTERY DEVICE APPLICATION DETERMINATION METHOD**

(30) Priority: 23.11.2022 KR 20220158746
(71) Applicant: LG Energy Solution, Ltd., Seoul 07335 (KR)
(72) Inventor: LEE, Jura, Daejeon 34122 (KR); KIM, Dong Hyun, Daejeon 34122 (KR)
(74) Representative: Plasseraud IP
(86) International application number: PCT/KR2023/018662
(87) International publication number: WO 2024/112029

(57) **Abstract**

Provided is a battery device installed in a system, the device including: a control integrated circuit (IC) controlling an operation of the battery device; a memory storing a plurality of applications respectively corresponding to the plurality of systems; and a switching logic confirming a protocol version, which is an identification ID for identifying the system, in a message received from the system in a mode in which the battery device is unable to perform a power operation, and providing the control IC with the application corresponding to the confirmed protocol version among the plurality of applications.

## Description

### [Technical Field]

### CROSS-REFERENCE TO RELATED APPLICATION

This application claims priority to and the benefit of Korean Patent Application No. 10-2022-0158746 filed in the Korean Intellectual Property Office on November 23, 2022, the entire contents of which are incorporated herein by reference.

The disclosure relates to a battery device and an application determination method of a battery device.

### [Background Art]

A plurality of systems may each use a plurality of interchangeable batteries. Conventionally, a replaced battery (hereinafter, a replacement battery) may not be operated based on a system installed with the replacement battery. That is, the replacement battery may provide the same functions to the corresponding system regardless of the system installed with the replacement battery.

The replacement battery may be recently installed in the system by using a battery swapping station (BSS), and the replacement battery may recognize the system through a controller area network (CAN) communication with the system installed with the replacement battery. An application switching function may be provided to the replacement battery so that the replacement battery may be operated in a manner appropriate to a feature of the recognized system. After the replacement battery is installed in the system, the replacement battery may periodically receive data from the system, and the data periodically received by the replacement battery may include an error. Due to this error, the replacement battery may recognize that the system installed with the replacement battery has been changed, or may fail to recognize the system. This problem may cause malfunction of the replacement battery.

### [Disclosure]

### [Technical Problem]

The disclosure attempts to provide a battery device which may distinguish and recognize a plurality of systems and be operated based on a recognition result.

### [Technical Solution]

According to an embodiment, provided is a battery device installed in a system, the device including: a control integrated circuit (IC) controlling an operation of the battery device; a memory storing a plurality of applications respectively corresponding to the plurality of systems; and a switching logic confirming a protocol version, which is an identification ID for identifying the system, in a message received from the system in a mode in which the battery device is unable to perform a power operation, and providing the control IC with the application corresponding to the confirmed protocol version among the plurality of applications.

The device may further include a communication device receiving the message from the system through controller area network (CAN) communication and delivering the received message to the switching logic, wherein the message is a CAN message.

The mode may include a sleep mode in which the battery device performs only a monitoring operation to detect an abnormal state of the battery device at low power.

The mode may include a shutdown mode in which power is supplied only to the control IC.

The control IC may control the operation of the battery device based on the application provided from the switching logic.

According to another embodiment, provided is an application determination method of a battery device, the method including: receiving, by a communication device, a message from any system; determining, by a switching logic, whether the battery device is in a specific mode; deriving, by the switching logic, a protocol version, which is an identification ID for identifying the any system, from the message provided from the communication device when the battery device is in the specific mode as a determination result; confirming, by the switching logic, the derived protocol version, and selecting, by the switching logic, an application corresponding to the confirmed protocol version; providing, by the switching logic, the selected application to a control integrated circuit (IC); and performing, by the control IC, a control operation based on the provided application. The specific mode may indicate a state where the battery device is unable to be operated.

The message may be a controller area network (CAN) message received through CAN communication between the communication device and the any system.

The specific mode may include a sleep mode in which the battery device performs only a monitoring operation to detect an abnormal state of the battery device at low power.

The specific mode may include a shutdown mode in which power is supplied only to the control IC.

The determining of whether the battery device is in the specific mode may include: requesting, by the switching logic, information on the mode from the control IC; and delivering, by the control IC, the information on the mode to the switching logic in response to the request.

### [Advantageous Effects]

As set forth above, the disclosure may provide the battery device which may distinguish and recognize the plurality of systems through the communication and be operated based on the recognition result, and the application determination method of a battery device.

### [Description of the Drawings]

FIG. 1 is a view schematically showing a battery device and a system installed with the battery device according to an embodiment.
FIG. 2 is a flowchart showing an application determination method of a battery device according to another embodiment.

### [Mode for Invention]

Terms "module" and/or "unit" for components described in the following description are used only to make the specification easily understood. Therefore, these terms do not have meanings or roles distinguished from each other in themselves. In addition, a term "part", "module", "device", or the like, described in the specification indicates a unit of processing at least one function or operation, which may be implemented by hardware or software or a combination of hardware and software.

Further, when it is decided that a detailed description of the known art related to the disclosure may obscure the gist of the disclosure, the detailed description will be omitted. Furthermore, it is to be understood that the accompanying drawings are provided only to allow the embodiments of the disclosure to be easily understood, and the spirit of the disclosure is not limited by the accompanying drawings and includes all the modifications, equivalents and substitutions included in the spirit and scope of the disclosure.

Terms including ordinal numbers such as "first", "second", and the like, may be used to describe various components. However, these components are not limited by these terms. These terms are used only to distinguish one component from another component.

It is to be understood that when one component is referred to as being "connected to" or "coupled to" another component, one component may be directly connected to or directly coupled to another component, or may be connected to or coupled to another component while having a third component interposed therebetween. On the other hand, it is to be understood that when referred to as being "connected directly to" or "coupled directly to" another element, one element may be connected to or coupled to another element without a third element interposed therebetween.

It is to be understood that terms "include," "have" and the like used in the present application specify the presence of features, numerals, steps, operations, components, parts or combinations thereof, mentioned in the specification, and do not preclude the presence or possible addition of one or more other features, numerals, steps, operations, components, parts or combinations thereof.

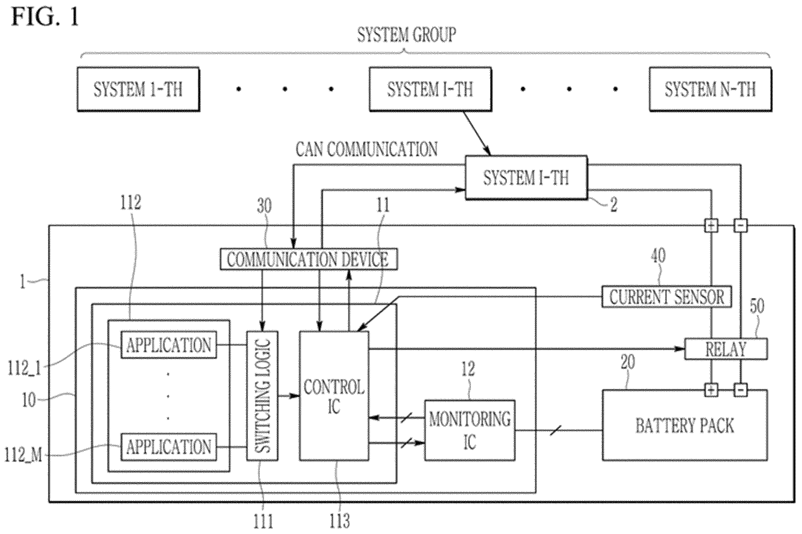

FIG. 1 is a view schematically showing a battery device and a system installed with the battery device according to an embodiment.

A system group which may replace batteries and use a replacement battery at a battery swapping station (BSS) may exist. The system group may include a plurality of systems 1-th to N-th, and each of the plurality of systems 1-th to N-th may have a different power operation required to be provided from the battery device. The power operation may include an operation of providing power from the battery device to the system. The system may be an electrical load requiring various types of power, such as a vehicle or a robot. Each system may have the different rated voltage, rated current, or the like of the power required to be provided from the battery. When the plurality of systems 1-th to N-th are electrically connected to each other by each having a battery device 1 installed therein, the corresponding system may be a master system for the battery device 1 that transmits a control instruction for controlling its power operation.

The battery device 1 may be operated based on an application generating a control signal for controlling the power operation by processing and calculating the control instruction received from the master system. For example, as shown in FIG. 1, the battery device 1 may be installed in the system i-th (or a system 2), and the system i-th or 2 may transmit a protocol version of the system i-th or 2. The protocol version may be an identification ID for identifying each of the plurality of systems 1-th to N-th, and each system may be given a unique identification ID, that is, the protocol version. The battery device 1 may recognize the system i-th or 2 as the master system by using the protocol version received from the system i-th or 2. The system i-th or 2 may be the master system for the battery device 1, and transmit a control instruction instructing power supply to the battery device 1.

As shown in FIG. 1, the battery device 1 may include a battery management system 10, a battery pack 20, a communication device 30, a current sensor 40, and a relay 50.

The communication device 30 may provide communication between the battery device 1 and the system i-th or 2. For example, when the battery device 1 and the system i-th or 2 transmit and receive information through controller area network (CAN) communication, the communication device 30 may include a CAN transceiver. A communication method between the battery device 1 and the system i-th or 2 is not limited to the CAN communication, and the communication device 30 may be implemented based on the communication method between the battery device 1 and the system i-th or 2. The communication device 30 may deliver the received information to the battery management system 10, and transmit the information provided from the battery management system 10 to the outside.

The battery pack 20 may include a plurality of battery cells connected in series, parallel, or series-parallel with each other. FIG. 1 shows only one battery pack 20. However, the battery device 1 may include two or more battery packs, and in this case, the plurality of battery packs may be connected in series, parallel, or series-parallel with each other. The relay 50 may be electrically connected between the positive (+) and negative (-) poles of the battery pack 20 and the positive (+) output terminal and negative (-) output terminal of the battery device 1. The relay 50 may be opened or closed by control of the battery management system 10.

The current sensor 40 may measure a pack current flowing through the battery pack 20. For example, when power is supplied to the system i-th or 2 from the battery device 1, the pack current flowing from the battery pack 20 to the system i-th or 2 may be measured. In addition, the current sensor 40 may measure the pack current supplied to the battery pack 20 when the battery device 1 is charged. The current sensor 40 may be implemented as a Hall sensor. As shown in FIG. 1, the current sensor 40 may be disposed between the positive (+) pole of the battery pack 20 and the positive (+) output terminal. The position of the current sensor 40 shown in FIG. 1 is an example, and the disclosure is not limited thereto.

The battery management system 10 may monitor the battery pack 20 by acquiring various information (hereinafter, state information) indicating a state of the battery pack 20, control the charge or discharge of the battery pack 20 based on a monitoring result, control a cell balancing operation for the plurality of battery cells, and control a protection operation for the battery pack 20. The state information may include information on voltages of the plurality of battery cells, and the battery management system 10 may be connected to the plurality of battery cells included in the battery pack 20 to measure cell voltages. The state information may include information on the pack current, and the current sensor 40 may measure the current flowing through the battery pack 20 and provide the information on the pack current to the battery management system 10. The battery management system 10 may detect an abnormal event which may occur in the battery pack 20, such as an overvoltage, an overcurrent, or overheating, and initiate the protection operation against the detected abnormal state.

The battery management system 10 may include the application implemented as a program that is a set of instructions necessary for controlling and performing the monitoring operation, the charge or discharge control operation, the cell balancing control operation, the protection operation, and the like. The battery management system 10 may include the plurality of applications respectively corresponding to at least some of the plurality of systems 1-th to N-th. The battery management system 10 may be executed by selecting the application corresponding to the master system, that is, the system installed with the battery device 1, among the plurality of applications. As the corresponding application is executed, the battery management system 10 may control the monitoring operation, the charge or discharge operation, the cell balancing operation, and the protection operation.

The battery management system 10 may include a main control circuit 11 and a monitoring integrated circuit (IC) 12, and the main control circuit 11 may include a switching logic 111, a memory 112, and a control IC 113.

The monitoring IC 12 may be connected to each of the plurality of battery cells included in the battery pack 20 to measure the voltages of the plurality of battery cells and a battery pack voltage which is a voltage across the battery pack 20. The monitoring IC 12 may measure a temperature of the battery pack 20. The monitoring IC 12 may perform the cell balancing for the plurality of battery cells under control of the control IC 113.

The control IC 113 may execute the application delivered by the switching logic 111 to thus control and perform the monitoring operation, the charge or discharge operation, the cell balancing operation, and the protection operation. For example, the control IC 113 may provide a cell voltage measurement control signal at each monitoring cycle to thus control cell voltage measurement for each of the plurality of battery cells. The control IC 113 may control the charge or discharge operation by controlling its connection to and disconnection from the relay 50. The control IC 113 may provide the cell balancing control signal to the monitoring IC 12 to thus control the cell balancing operation for the battery cells in the overvoltage state among the plurality of battery cells. The control IC 113 may control the protection operation by detecting the abnormal state and then disconnecting the relay 50 therefrom.

The memory 112 may store each of a plurality of applications 112_1-th to 112_M-th in each of a plurality of application storage regions. Each of the plurality of applications 112_1-th to 112_M-th may be an application for a corresponding system among the plurality of systems 1 to M. "M" may be a natural number less than or equal to "N". The memory 112 may be implemented as a non-volatile memory. Each of the plurality of application storage regions may be distinguished by an address in the memory 112.

The switching logic 111 may receive a CAN message received by the communication device 30 under a specific mode, and derive the protocol version of the master system from the CAN message. The switching logic 111 may confirm the derived protocol version as a protocol version indicating the master system currently installed with the battery device 1. The switching logic 111 may confirm the application corresponding to the confirmed protocol version among the plurality of applications 112_1-th to 112_M-th, and provide the control IC 113 with the confirmed application.

The specific mode may be a mode for the state of the battery device 1, which may include some mode other than a working mode and a standby mode. The battery device 1 normally performs the power operation (or its charge or discharge) in the working mode. The standby mode indicates a standby state where the power operation may be performed. A normal mode may include the working mode and the standby mode. In the working mode, the battery device 1 may actually perform the power operation, and in the standby mode, the battery device 1 may be in the standby state where the battery device 1 may perform the power operation and does not actually perform the same. The specific mode may include a mode other than the normal mode, in which the battery device 1 is unable to perform the power operation. For example, the specific mode may include a sleep mode and a shutdown mode. The sleep mode may indicate a state where the battery device 1 performs only a determined specific operation at a low power state. The specific operation may include only the monitoring operation to detect the abnormal state of the battery device 1. The shutdown mode may indicate a state where power is supplied only to the control IC 113 of the battery device 1. In the shutdown mode, the battery device 1 may be actually in a stop state. Each of the sleep mode and the shutdown mode is an example of the state where the battery device 1 does not perform the power operation, and the disclosure is not limited thereto. Each of the sleep mode and the shutdown mode may be determined in various ways based on its design.

The switching logic 111 may determine the address indicating the application corresponding to the confirmed protocol version, and read the application from the application storage region corresponding to the determined address to thus provide the same to the control IC 113.

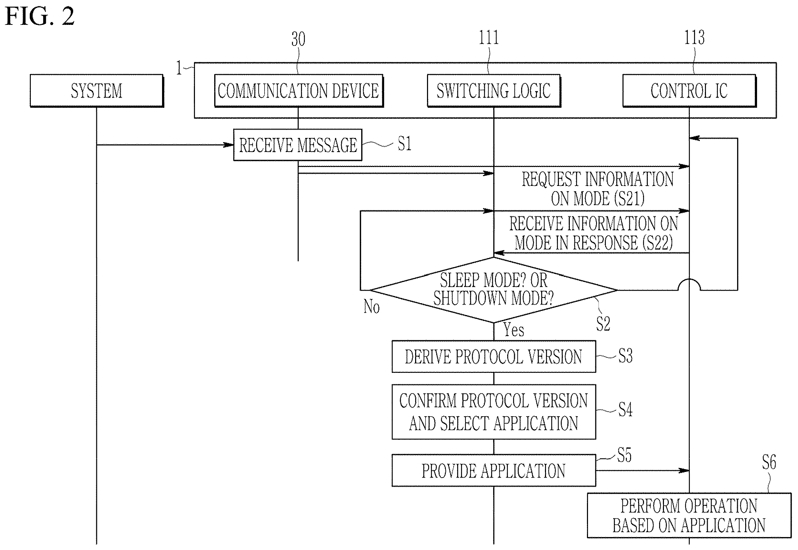

FIG. 2 is a flowchart showing an application determination method of a battery device according to another embodiment.

The communication device 30 may receive the message from any system at any time point (S1). For example, the communication device 30 may receive the CAN message through the CAN communication. The CAN message may include the protocol version. The communication device 30 may deliver the received message to the control IC 113 and the switching logic 111. FIG. 1 shows that the communication device 30 provides the message to the switching logic 111 and the control IC 113. However, the communication device 30 may provide the CAN message only to the switching logic 111. Alternatively, the communication device 30 may provide the CAN message only to the control IC 113, and the control IC 113 may deliver the CAN message to the switching logic 111. In this case, the control IC 113 may be required to perform at least the operation of delivering the message provided from the communication device 30 to the switching logic 111 in the sleep mode or the shutdown mode.

The switching logic 111 may determine whether the battery device 1 is in the sleep mode or the shutdown mode when the message is provided from the communication device 30 (S2). For example, the switching logic 111 may request information on the mode from the control IC 113 (S21), and receive the information on the mode in response to the request (S22). The switching logic 111 may determine that the battery device 1 is in the sleep mode or the shutdown mode when there is no response within a predetermined period after requesting the information on the mode from the control IC 113.

When the battery device 1 is in the sleep mode or the shutdown mode as a determination result in the step S2, the switching logic 111 may derive the protocol version from the message (S3). When the battery device 1 is not in the sleep mode or the shutdown mode as the determination result in the step S2, the switching logic 111 may not respond to the message. The switching logic 111 may repeat the steps S21, S22, and S2 whenever receiving the message from the communication device 30. The control IC 113 may control the battery device 1 in the standby mode or the working mode based on a current application.

After the step S3, the switching logic 111 may confirm the derived protocol version, and select the application corresponding to the confirmed protocol version (S4).

The switching logic 111 may provide the selected application to the control IC 113(S5). The control IC 113 may perform the control operation based on the application provided by the switching logic 111 (S6).

As such, the main control circuit 11 of the battery device 1 according to an embodiment may derive and confirm the protocol version from the message received from the master system only when the battery device 1 is in the sleep mode or the shutdown mode. The battery device 1 may then ignore the protocol version included in the message, and be stably operated based on the application corresponding to the confirmed protocol version even when the master system installed with the battery device 1 transmits a message including an incorrect protocol version to the battery device 1 during its operation. It is thus possible to recognize the incorrect protocol version received from the system to thus solve malfunction of a conventional battery device.

Although the embodiments of the disclosure have been described in detail hereinabove, the scope of the disclosure is not limited thereto. That is, various modifications and alterations made by those skilled in the art by using a basic concept of the disclosure as defined in the following claims fall within the scope of the disclosure.

## Claims

1. A battery device installed in a system, the device comprising:
a control integrated circuit (IC) controlling an operation of the battery device;
a memory storing a plurality of applications respectively corresponding to the plurality of systems; and
a switching logic confirming a protocol version, which is an identification ID for identifying the system, in a message received from the system in a mode in which the battery device is unable to perform a power operation, and providing the control IC with the application corresponding to the confirmed protocol version among the plurality of applications.

2. The device of claim 1, further comprising
a communication device receiving the message from the system through controller area network (CAN) communication and delivering the received message to the switching logic,
wherein the message is a CAN message.

3. The device of claim 1, wherein
the mode includes
a sleep mode in which the battery device performs only a monitoring operation to detect an abnormal state of the battery device at low power.

4. The device of claim 1, wherein
the mode includes
a shutdown mode in which power is supplied only to the control IC.

5. The device of claim 1, wherein
the control IC controls
the operation of the battery device based on the application provided from the switching logic.

6. An application determination method of a battery device, the method comprising:
receiving, by a communication device, a message from any system;
determining, by a switching logic, whether the battery device is in a specific mode;
deriving, by the switching logic, a protocol version, which is an identification ID for identifying the any system, from the message provided from the communication device when the battery device is in the specific mode as a determination result;
confirming, by the switching logic, the derived protocol version, and selecting, by the switching logic, an application corresponding to the confirmed protocol version;
providing, by the switching logic, the selected application to a control integrated circuit (IC); and
performing, by the control IC, a control operation based on the provided application,
wherein the specific mode indicates a state where the battery device is unable to be operated.

7. The method of claim 6, wherein
the message is a controller area network (CAN) message received through CAN communication between the communication device and the any system.

8. The method of claim 6, wherein
the specific mode includes
a sleep mode in which the battery device performs only a monitoring operation to detect an abnormal state of the battery device at low power.

9. The method of claim 6, wherein
the specific mode includes
a shutdown mode in which power is supplied only to the control IC.

10. The method of claim 6, wherein
the determining of whether the battery device is in the specific mode includes:
requesting, by the switching logic, information on the mode from the control IC; and
delivering, by the control IC, the information on the mode to the switching logic in response to the request.
